# EUROPEAN PATENT APPLICATION

(11) **EP 4 624 529 A1**
(43) Date of publication of application: **01.10.2025**
(21) Application number: 24167637.8
(22) Date of filing: 28.03.2024
(51) Int. Cl.: C08L 67/02, B32B 27/36, C08J 5/18

(54) **BIODEGRADABLE POLYMER COMPOSITION FOR INJECTION MOLDING AND THERMOFORMING**

(71) Applicant: BASF SE, 67056 Ludwigshafen am Rhein (DE)
(72) Inventor: The designation of the inventor has not yet been filed
(74) Representative: BASF IP Association

(57) **Abstract**

The present invention relates to a biodegradable polymer composition comprising polybutylene succinate, a polyhydroxyalkanoate, a biodegradable aliphatic-aromatic polyester, and polycaprolactone and/or a succinate-copolymer with balanced mechanical properties for use in injection molding and thermoforming.

## Description

The present invention relates to a biodegradable polymer composition comprising polybutylene succinate, a polyhydroxyalkanoate, a biodegradable aliphatic-aromatic polyester, and polycaprolactone and/or a succinate-copolymer. The invention also relates to articles produced from such compositions, and a process for producing such articles from said compositions.

The aim of the present invention are biodegradable polymer compositions which are suited for producing articles like packaging by injection molding and thermoforming processes. For this, the composition requires a good balance of various mechanical properties, in particular between stiffness and heat resistance vs. notched impact strength. These properties are typically contrary, but for packaging such as coffee capsules, all three of them are needed within certain limits. In addition, the processability depends on the flow behavior of the composition used. For injection molding applications a melt volume rate (MVR) of the composition above 15 cm³/10 min (190 °C, 2.16 kg weight) is ideal, although it also works with lower values. In contrast, with thermoforming, it is important that the composition to be used has a lower MVR, e.g. below 10 cm³/10 min.

This object is solved by a biodegradable polymer composition comprising
i) 30 to 80 wt.-%, preferably 35 to 70 wt.-%, more preferably 40 to 65 wt.-%, based on the total weight of components i)-iv), of at least one polybutylene succinate,
ii) 5 to 30 wt.-%, preferably 5 to 27 wt.-%, more preferably 6 to 25 wt.-%, based on the total weight of components i)-iv), of at least one polyhydroxyalkanoate selected from polylactic acid, polyhydroxy butyrate, polyhydroxy butyrate-co-hydroxy valerate, and polyhydroxy butyrate-co-hydroxy hexanoate;
iii) 3 to 30 wt.-%, preferably 4 to 25 wt.-%, more preferably 5 to 20 wt.-%, based on the total weight of components i)-iv), of at least one biodegradable aliphatic-aromatic polyester;
iv) 5 to 30 wt.-%, preferably 5 to 25 wt.-%, more preferably 5 to 22 wt.-%, based on the total weight of components i)-iv), of at least one polymer selected from polycaprolactone and succinate-copolymers based on
   iv-a) from 70 to 100 mol%, based on components iv-a) to iv-b), of succinic acid;
   iv-b) from 0 to 30 mol%, based on components iv-a) to iv-b), of one or more C₆-C₁₈ dicarboxylic acids;
   iv-c) from 98 to 102 mol%, based on components iv-a) to iv-b), of a diol selected from 1,3-propanediol and 1,4-butanediol;
   iv-d) from 0 to 1% by weight, based on components iv-a) to iv-c), of a chain extender and/or branching agent;
v) 0 to 40 wt.-%, preferably 2 to 38 wt.-%, more preferably 5 to 35 wt.-%, based on the total weight of the polymer composition, of at least one inorganic filler and/or organic filler; and
vi) 0 to 5 wt%, based on the total weight of the polymer composition, of at least one compound selected from cross-linking agents, chain extenders, stabilizers, nucleating agents, lubricants, release agents, surfactants, waxes, antistatic agents, antifoggants, dyes, pigments, UV absorbers, UV stabilizers, oxygen scavangers, and other plastics additives;

where the weight ratio of the sum of components iii) and iv) vs. component i) is smaller than 1,
the use of such biodegradable polymer composition for producing injection molded or thermoformed articles, a process for producing said articles and the articles produced from said polymer composition.

The biodegradable polymer composition described herein shows a beneficial balance of stiffness and heat deflection temperature vs impact strength which makes it a good starting material for the production of packaging like yoghurt or margarine cups, lids for coffee cups or other cups for hot drinks, as well as containers for filling hot food, coffee capsules, chocolate box inserts, game box inserts, folding blisters for all kinds of small items and the like; the biodegradable polymer composition is also suited for producing microwave dishes and the like. At the same time, it is biodegradable and compostable under industrial composition conditions, preferably it is compostable under home compostable conditions.

The present invention is described in more detail below.

The biodegradable polymer composition comprises at least one polybutylene succinate (PBS) as component i). PBS is obtainable by polycondensation of succinic acid, 1,4-butandiol and optionally a chain extender and/or crosslinker, which may be selected from the group consisting of a polyfunctional isocyanate, isocyanurate, oxazoline, epoxide, in particular an epoxy-containing poly(meth)acrylate, an at least trihydric alcohol and an at least tribasic carboxylic acid as described in WO 2010/034711 A1.

The polybutylene succinate usually has a number-average molecular weight (Mn) in the range of 5 000 to 100 000, especially in the range of 8 000 to 75 000 g/mol, preferably in the range of 10 000 to 50 000 g/mol, an average weight molecular weight (Mw) of 30 000 to 300 000, preferably 60 000 to 200 000 g/mol and an Mw/Mn ratio of 1 to 6, preferably 2 to 5, measured by GPC in a hexafluoroisopropanol (HFIP) solution against narrow polymethylmethacrylate (PMMA) standards. The melting point is usually in the range from 85 to 130, preferably in the range from 95 to 120°C. In case, the biodegradable polymer composition is used for injection molding, the PBS has preferably a MVR according to DIN EN 1133-1 in the range from 8 to 50 and more preferred from 15 to 40 cm³/10 min (190 °C, 2.16 kg). In case the biodegradable polymer composition is used for thermoforming, the PBS has preferably a MVR according to DIN EN 1133-1 in the range from 1 to 30 and more preferred from 3 to 20 cm³/10 min (190°C, 2.16 kg).

The concentration of the PBS i) is in the range from 30 to 80 wt.-%, based on the total weight of components i)-iv), preferably in the range from 35 to 70 wt.-%, and more preferred in the range from 40 to 65 wt.-%, based on the total weight of components i)-iv).

The biodegradable polymer composition comprises at least one polyhydroxyalkanoate selected from polylactic acid, polyhydroxy butyrate, polyhydroxy butyrate-co-hydroxy valerate, and polyhydroxy butyrate-co-hydroxy hexanoate.

Polylactic acid (PLA), also known as polylactide, is a thermoplastic polyester with backbone formula (C₃H₄O₂)ₙ or [-C(CH₃)HC(=O)O-]ₙ, formally obtained by condensation of lactic acid C(CH₃)(OH)HCOOH with loss of water. It can also be prepared by ring-opening polymerization of either D-lactide, L-lactide, meso-lactide or mixtures thereof. In case only D- or only L-lactide are polymerized, the resulting polymer chains consist essentially of D- or L-lactic acid units, respectively. In case of polymerizing of a mixture of D- and L-lactide longer sequences of -(D)ₙ and -(L)ₙ are obtained due to the random polymerization of D- and L-lactide. In case the PLA is prepared from D-lactide and L-lactide only, i.e. without meso-lactide, the minimum block length of the D- and L-lactic units in the polylactide is 2 from a theoretical point of view. This would only be the case in a strict alternating reaction of D- and L-lactide.

The latter also holds true if mixtures of either L-lactide and a minor amount of meso-lactide or D-lactide with a minor amount of meso-lactide are polymerized.

The term "units derived from lactic acids", also referred to as "lactic units", means the monomeric lactic acid units derived from L-lactic acid or D-lactic acid.

A preferred polylactide to be used has a ratio of L-lactic units : D-lactic units of above 15:85 up to below 85:15. Preferably the ratio of L-lactic units : D-lactic units in the polylactide a1) is at least 16:84 up to 84:16, more preferred it is at least 17:83 up to 83:17, very preferred it is at least 18:82 up to 82:18, even more preferred it is at least 20:80 up to 80:20, in particular preferred it is at least 20:80 up to below 80:20. In case the ratio is at least 20:80 up to below 80:20, it preferable is at least 25:75 up to 75:25, more preferred is at least 30:70 up to 70:30, even more preferred the ratio of L-lactic units : D-lactic units is at least 35:65 up to 65:35 and in particular preferred the ratio is at least 40:60 up to 60:40.

The relative amounts of D- and L-Lactic acid enantiomers may be determined as follows:
2.00 g of the polylactide or poly(meso-lactide) samples are stirred at 65 °C for 30 min in 40 mL of a 1 molar methanolic KOH solution. 3 ml concentrated sulfuric acid are carefully added in order to lower the pH into the acidic pH region and esterification with methanol is conducted for 10 min at 65 °C. To 1.25 mL of the obtained solution 0.75 mL of water and 3.25 mL of dichloro-methane are added and the organic phase is separated after mixing. The dichloromethane phase is analyzed by chiral GC using an Agilent CycloSil-B chiral capillary GC column which contains 30% loading of b-cyclodextrin derivative embedded in DB-1701 mid polarity stationary phase. Methyl lactate enantiomers elute under isothermal conditions and the ratio is directly calculated from the peak areas since both enantiomers exhibit the same response factors.

The polylactic acid may further contain repeating units formed from other monomers that are co-polymerizable with meso-lactide or D- or L-lactide, such as alkylene oxides (including ethylene oxide, propylene oxide, butylene oxide, tetramethylene oxide, and the like), cyclic lactones, or carbonates. Repeating units derived from these other monomers can be present in block and/or random arrangements. These other repeating units may constitute up to 10% by weight of the polylactic acid, preferably from 0% to 5% by weight, especially preferred from about 0% to 2% by weight, of the PLA, and may be absent. The remaining weight of the polylactic acid may include residues of an initiator compound, which is often used during the polymerization process to provide molecular weight control. Suitable such initiators include, for example, water, alcohols, polyhydroxy compounds of various types (such as ethylene glycol, propylene glycol, polyethylene glycol, polypropylene glycol, other glycol ethers, glycerin, trimethylolpropane, pentaerythritol, hydroxyl-terminated butadiene polymers, and the like), polycarboxyl-containing compounds, and compounds having at least one carboxyl and one hydroxyl group (such a lactic acid or lactic acid oligomer). The initiator residue preferably constitutes no more than 5%, and especially no more than 2% of the weight of the polylactic acid except in the case in which the initiator is a residue of a lactic acid or lactic acid oligomer, which can constitute any proportion of the polylactic acid.

The polylactic acid may have a number-average molecular weight as measured by GPC in THF against a polystyrene standard of at least 5 000 g/mol, preferably at least 20 000 g/mol, more preferred at least 30 000 g/mol and most preferred more than 50 000 g/mol. Preferably, the upper limit of the number-average molecular weight is 200 000 g/mol, more preferred 130 000 g/mol. Preferably polylactic acid has a number-average molecular weight in the range of 5 000 g/mol to 200 000, more preferred the number-average molecular weights is in the range of 20 000 to 200 000 g/mol, even more preferred in the range of 30 000 to 130 000 g/mol, in particular in the range of 50 000 to 130 000 g/mol.

The polylactic acid may have a relative viscosity of 1.1 to 6, such as 1.25 to 5, or 1.5 to 3.5, measured using a 1% wt/vol solution of the polylactic acid in chloroform against a chloroform standard on a capillary viscometer at 30°C.

The polylactic acid may have a melt volume rate (MVR) to EN ISO 1133 (190°C, 2.16 kg weight) of 0.5 to 80, preferably 2 to 40 cm³/10 min.

The polylactic acid may be crystalline, semi-crystalline or amorphous. Particularly, suitable polylactic acid has a melting or softening point below 240°C, particularly below 230°C, especially below 220°C, as determined by DSC. Generally, the melting point of crystalline or semi crystalline polylactic acid will be at least 120°C.

Polylactic acids are commercially available from NatureWorks, for example, under the trade name Ingeo^{™} 6201D, Ingeo^{™} 6202D, Ingeo^{™} 6251D, Ingeo^{™} 3051D, Ingeo^{™} 4043D, Ingeo^{™} 4950D, Ingeo^{™} 3251D; from Total Corbion under the trade name Luminy^{®} LX975, Luminy^{®} LX930, Luminy^{®} LX175; Luminy^{®} LX575, Luminy^{®} L130, Luminy^{®} LX530, Luminy^{®} L105; and from Hisun under the trade name Revode 110, Revode 190 Revode 290.

A particularly preferred polylactic acid has the following range of properties:
- a melt volume rate (MVR) to EN ISO 1133 (190°C, 2.16 kg weight) of 0.5 to 80 especially 2 to 40 cm³/10 min;
- a melting point below 240° C;
- a water content of below 1000 ppm;
- a residual (lactide) monomer content of below 0.3%;
- a molecular weight Mw of above 40 000 g/mol.

Poly-3-hydroxybutyrates are available from Tianan under the name Enmat^{®}. Poly(3-hydroxybutyrate-co-4-hydroxybutyrate)s were first developed by Metabolix and will be commercialized by CJ CheiIJedang. Poly(3-hydroxybutyrate-co-3-hydroxyhexanoate)s are commercially available from Kaneka (Aonilex^{™}) or Danimer Scientific (Nodax^{®}). Poly(3-hydroxybutyrate-co-3-hydroxyhexanoate)s generally have a 3-hydroxyhexanoate content of 1 to 20 and preferably 3 to 15 mol-% based on the polyhydroxyalkanoate. Preferred are poly(hydroxybutyrate-co-hydroxyhexanoate)s, in particular poly(3-hydroxybutyrate-co-3-hydroxyhexanoate).

Polylactic acid is preferred as component ii).

The concentration of component ii) in the biodegradable polymer composition is in the range from 5 to 30 wt.-%, based on the total weight of components i)-iv), preferably 5 to 27 wt.-%, and more preferred 6 to 25 wt.-%, based on the total weight of components i)-iv).

The biodegradable polymer composition comprises at least one biodegradable aliphatic-aromatic polyester as component iii). Biodegradable aliphatic-aromatic polyesters are well known and described e.g. in WO2009/127556 A1.

The aliphatic-aromatic polyester iii) is preferably based on:
iii-a) from 20 to 70 mol%, based on components iii-a) to iii-b), of an aliphatic C₆-C₁₈ dicarboxylic acid;
iii-b) from 30 to 80 mol%, based on components iii-a) to iii-b), of an aromatic dicarboxylic acid;
iii-c) from 98 to 102 mol%, based on components iii-a) to iii-b), of a C₂-C₁₀ diol;
iii-d) from 0 to 1% by weight, based on components iii-a) to iii-c), of a chain extender and/or branching agent.

The term "polyester based on an acid" as used herein means that the polyester comprises repeating units derived from the respective dicarboxylic acid. The polyester itself may be synthesized from the acid directly or from appropriate acid derivatives like alkyl esters and anhydrides.

The aliphatic C₆-C₁₈ dicarboxylic acids iii-a) are preferably selected from C₆-C₁₄ dicarboxylic acids, more preferably from C₆-C₁₃ dicarboxylic acids, their derivatives and mixtures thereof. The derivatives may be the C₁-C₆ dialkyl esters or anhydrides. Examples of the C₁-C₆ dialkylesters are dimethyl, diethyl, di-n-propyl, diisopropyl, di-n-butyl, diisobutyl, di-tert-butyl, di-n-pentyl, diisopentyl, and di n-hexylesters. Preferred are the C₁-C₄ dialkyl esters and in particular preferred are dimethyl esters. Examples of the aliphatic dicarboxylic acids and their derivatives are adipic acid, pimelic acid, suberic acid, azelaic acid, sebacic acid, dodecanedioic acid, brassylic acid, hexadecanedioic acid, and octadecanedioic acid; their derivatives, in particular the C₁-C₄ dialkyl esters; and mixtures thereof. Preferably the aliphatic C₆-C₁₈ dicarboxylic acids are selected from adipic acid, azelaic acid, sebacic acid, dodecanedioic acid, brassylic acid, their derivatives, in particular the C₁-C₄ alkyl esters, and mixtures thereof, in particular preferred the aliphatic dicarboxylic acids are selected from adipic acid, azelaic acid, sebacic acid and brassylic acid, their C₁-C₄ alkyl esters, and mixtures thereof. Azelaic acid, sebacic acid, and brassylic acid have the additional advantage of being available from renewable raw materials.

The aliphatic C₆-C₁₈ dicarboxylic acids iii-a) may be selected from mixtures of at least two aliphatic acids or their derivatives, e.g. from mixtures of adipic acid with one or more additional aliphatic acid selected from pimelic acid, suberic acid, azelaic acid, sebacic acid, brassylic acid, dodecanedioc acid, hexadecanedioic acid, octadecanedioic acid, their anhydrides or their C₁-C₄ alkyl esters.

The concentration of the one or more aliphatic C₆-C₁₈ dicarboxylic acid iii-a) is usually 20 to 70 mol %, based on the total weight of components iii-a) and iii-b).

The aromatic dicarboxylic acids iii-b) may be selected from aromatic and heteroaromatic C₆-C₁₂ dicarboxylic acids, preferably from aromatic and heteroaromatic C₆-C₈ dicarboxylic acids, and their derivatives. Examples of such aromatic and heteroaromatic dicarboxylic acids and derivatives are terephthalic acid, isophthalic acid, 2,6-naphthoic acid and 1,5-naphthoic acid, 2,5-furandicarboxylic acid, 2,4-furandicarboxylic acid, 2,3-furandicarboxylic acid, 3,4-furandicarboxylic acid, their C₁-C₆ dialkyl esters, their anhydrides and mixtures thereof. Preferred are the C₁-C₄ dialkyl esters, in particular preferred are methyl esters. Examples of the C₁-C₆ dialkylesters are dimethyl, diethyl, di-n-propyl, diisopropyl, di-n-butyl, diisobutyl, di-tert-butyl, di-n-pentyl, diisopentyl, and di-n-hexylesters. Preferably the aromatic dicarboxylic acids or their derivatives are selected from terephthalic acid, 2,5-furandicarboxylic acid and their derivatives, in particular their C₁-C₄ alkyl esters, in particular preferred are terephthalic acid and its C₁-C₄ alkyl esters.

The concentration of the aromatic dicarboxylic acid or aromatic dicarboxylic acid derivative is usually 80 to 30 mol %, based on the total amount of components iii-a) and iii-b). In case the aromatic dicarboxylic acid or dicarboxylic acid derivative is terephthalic acid or a derivative thereof, its concentration in the polyester is preferably 30 to 70 mol.-%, in case the aromatic dicarboxylic acid or di-carboxylic acid derivative is a furane dicarboxylic acid like 2,5-furandicarboxylic acid or a derivative thereof, its concentration in the polyester is preferably 50 to 80 mol.-%, based on the total amount of components iii-a) and iii-b).

The aliphatic diol iii-c) may be selected from aliphatic C₂-C₁₀ diols, preferably from C₂-C₆ diols and more preferred from C₂-C₄ diols. Examples of suitable aliphatic C₂-C₁₀ diols are 1,2-ethanediol, 1,2-propanediol, 1,3-propanediol, 1,2-butanediol, 1,4-butanediol, 1,5-pentanediol, 2,2-dimethyl-1,3-propanediol (neopentyl glycol), 1,6-hexanediol, 2,4-dimethyl-2-ethyl-1,3-hexanediol, 2,2-dimethyl-1,3-propanediol, 2-ethyl-2-butyl-1,3-propanediol, 2-ethyl-2-isobutyl-1,3 propanediol and 2,2,4-trimethyl-1,6-hexanediol, cyclopentanediol, 1,4-cyclohexanediol, 1,2-cyclohexanedimethanol, 1,3-cyclohexanedimethanol, 1,4-cyclohexanedimethanol, isosorbide, isoiodide and 2,2,4,4-tetramethyl-1,3 cyclobutanediol. Preferred aliphatic C₂-C₁₀ diols are 1,2-ethanediol, 1,3-propanediol, 1,4-butanediol and 1,6-hexanediol, in particular 1,3-propanediol and 1,4-butanediol. It is also possible to use mixtures of different aliphatic diols. Preferably the aliphatic diol iii-c) contains at least 50% by moles of one or more diols selected from 1,2-ethanediol, 1,3-propanediol, 1,6-hexanediol and 1,4-butanediol. More preferred the aliphatic diol iii-c) is 1,4-butanediol.

In particular preferred are diols generated from renewable resources like 1,4-butanediol from either direct fermentation (WO2008/115840) or from the hydrogenation of biobased succinic acid or 1,3-propanediol from fermentation developed by DuPont and Tate & Lyle.

The aliphatic diol iii-c) is usually present in a concentration of 98 to 102 mol %, based on the based on the total amount of iii-a) and iii-b).

In particular preferred are aliphatic-aromatic polyesters wherein the aliphatic C₆-C₁₈ dicarboxylic acid iii-a) is selected from adipic acid, azelaic acid, sebacic acid, dodecanedioic acid, brassylic acid, their derivatives, and mixtures thereof; wherein the aromatic dicarboxylic acid iii-b) is selected from terephthalic acid, 2,5-furandicarboxylic acid, their derivatives and mixtures thereof; and wherein the diol iii-c) is selected from 1,3-propanediol and 1,4-butanediol, in particular preferred the diol iii-c) is 1,4-butanediol. The dicarboxylic acid derivatives are preferably the C₁-C₄ alkyl esters, in particular the methyl esters.

The chain extender and/or branching agent iii-d) is present in the range from 0 to 1% by weight, based on components iii-a) to iii-c). Compounds suited as chain extender and/or branching agent iii-d) are known to the person skilled in the art and are described e.g. in WO 2009/127556 A1 as components b2) and D). Chain extenders are polyfunctional and especially difunctional. Examples are isocyanates like 1,6-hexamethylene diisocyanate; isocyanurates; oxazolines; carboxylic anhydrides; carbodiimides or epoxides like copolymer based on styrene, acrylic ester and/or methacrylic ester, preferably of the styrene-glycidylether-methylmethacrylate type. Preferably the chain extender iii-d) is selected from isophorone diisocyanate, 1,6-hexamethylene diisocyanate, 1,5-pentamethylendiisocyanate, 4,4-diphenylmethane diisocyanate, and epoxy-containing copolymers based on styrene, acrylic ester and methacrylic ester, preferably of the styrene-glycidylether-methylmethacrylate type. Crosslinkers usually contain at least three functional groups. Particularly preferred crosslinkders have three to six hydroxyl groups. Examples are trimethylolpropane, pentaerythritol, and glycerol.

The aliphatic-aromatic polyester is in particular preferred based on:
iii-a) from 20 to 70 mol%, based on components iii-a) to iii-b), of an aliphatic C₆-C₁₈ dicarboxylic acid;
iii-b) from 30 to 80 mol%, based on components iii-a) to iii-b), of an aromatic dicarboxylic acid selected from terephthalic acid and 2,5-furanedicarboxylic acid;
iii-c) from 98 to 102 mol%, based on components iii-a) to iii-b), of a diol selected from 1,3-propanediol and 1,4-butanediol;
iii-d) from 0 to 1% by weight, based on components iii-a) to iii-c), of a chain extender and/or branching agent.

The aliphatic-aromatic polyester iii) may be selected from polybutylene-adipate-co-terephthalate, polybutylene-sebacate-co-terephthalate, polybutylene-azelate-co-terephthalate, polybutylene-brassylate-co-terephthalate, polybutylene-adipate-co-sebacate-co-terephthalate, polybutylene-adipate-co-azelate-co-terephthalate, polybutylene-adipate-co-brassylate-co-terephthalate, polybutylene-azelate-co-sebacate-co-terephthalate, polybutylene-brassylate-co-sebacate-co-terephthalate, polybutylene-adipate-co-furanoate polybutylene-sebacate-co-furanoate, polybutylene-azelate-co-furanoate, polybutylene-brassylate-co-furanoate, polybutylene-adipate-co-sebacate-co-furanoate, polybutylene-adipate-co-azelate-co-furanoate, polybutylene-adipate-co-brassylate-co-furanoate, polybutylene-azelate-co-sebacate-co-furanoate, and polybutylene-brassylate-co-sebacate-co-furanoate, preferably the aliphatic-aromatic polyester iii) is selected from, polybutylene-adipate-co-terephthalate, polybutylene-sebacate-co-terephthalate, polybutylene-azelate-co- terephthalate, and polybutylene-adipate-co-sebacate-co-terephthalate, in particular preferred is polybutylene-sebacate-co-terephthalate.

The aliphatic-aromatic polyester iii) usually has a number-average molecular weight (Mn) in the range of 5 000 to 100 000, especially in the range of 10 000 to 75 000 g/mol, preferably in the range of 15 000 to 38 000 g/mol, a weight-average molecular weight (Mw) of 30 000 to 300 000, preferably 60 000 to 200 000 g/mol and an Mw/Mn ratio of 1 to 6, preferably 2 to 4, measured by GPC in a hexafluoroisopropanol (HFIP) solution against narrow polymethylmethacrylate (PMMA) standards. The viscosity number is usually between 50 and 450, preferably from 80 to 250 g/mL (measured in o-dichlorobenzene/phenol (weight ratio 50/50) according to DIN 53728-3:1985-1. The melting point is usually in the range of 85 to 150, preferably in the range of 95 to 140°C. The MVR according to EN ISO 1133-1 DE (190°C, 2.16 kg weight) is usually 0.1 to 20, preferably 0.5 to 20, more prefered 1.5 to 15 cm³/10 min.

The acid numbers may be determined according to DIN EN 12634. It is possible to exchange the highly toxic tetramethylammonium hydroxide to be used according to DIN EN 12634 by tetrabutylammonium hydroxide as titrating agent. If it is difficult to dissolve the aliphatic-aromatic polyester sample in the solvent mixture provided for in DIN EN 12634, it is possible to raise the temperature to 70 to 85°C to obtain a solution of the polyester sample. During the titration the temperature of the solution should then be kept at 65 to 75°C to avoid sample precipitation. The acid numbers are usually 0.01 to 1.2 mg KOH/g, preferably 0.01 to 1.0 mg KOH/g and in particular preferably 0.01 to 0.7 mg KOH/g.

In a particularly preferred embodiment using an aromatic-aliphatic polyester iii) with a MVR according to DIN EN 1133-1 smaller than 5 cm³/10 min (190 °C, 2.16 kg), the concentration of polyester iii) in the biodegradable polymer composition is usually in the range from 5 to 30 wt.-%, based on the total weight of components i)-iv), preferably 5 to 25 wt.-%, and more preferred 10 to 22 wt.-%, based on the total weight of components i)-iv). Such aromatic-aliphatic polyesters iii) are especially suitable for use in polymer compositions for thermoforming applications.

In another particularly preferred embodiment using an aromatic-aliphatic polyester iii) with a MVR according to DIN EN 1133-1 greater than 5 cm³/10 min (190 °C, 2.16 kg), the concentration of the aliphatic-aromatic polyester iii) in the biodegradable polymer composition is usually in the range from 5 to 30 wt.-%, based on the total weight of components i)-iv), preferably 5 to 20 wt.-%, and more preferred 5 to 16 wt.-%, based on the total weight of components i)-iv). Such aromatic-aliphatic polyesters iii) are especially suitable for use in polymer compositions for injection molding applications.

The biodegradable polymer composition comprises as component iv) at least one polymer selected from polycaprolactone and succinate-copolymers based on
iv-a) from 70 to 100 mol%, based on components iv-a) to iv-b), of succinic acid;
iv-b) from 0 to 30 mol%, based on components iv-a) to iv-b), of one or more C₆-C₁₈ dicarboxylic acids;
iv-c) from 98 to 102 mol%, based on components iv-a) to iv-b), of a diol selected from 1,3-propanediol and or 1,4-butanediol; and
iv-d) from 0 to 1% by weight, based on components iv-a) to iv-c), of a chain extender and/or branching agent.

Polycaprolactone, more precisely poly-ε-caprolactone, is a class of linear aliphatic polyesters obtained by the ring-opening polymerization of ε-caprolactone monomers under the catalysis of metal-organic compounds (such as tetraphenyltin, tin(ii) 2-ethylhexanoate). Generally, polycaprolactone has a melting point of 59 to 64°C and a glass transition temperature of -60°C. Its structural repeating unit has 5 non-polar methylene -CH₂- and one polar ester group -COO-, namely -(COOCH₂CH₂CH₂CH₂CH₂-)ₙ. This structure provides polycaprolactone with good flexibility processability, and at the same time, good biocompatibility.

The number average molecular weight of the polycaprolactone is generally in the range from 10 000 to 100 000 g/mol and preferably in the range from 25 000 to 85 000 g/mol determined via GPC in HFIP (hexafluoroisopropanol) as solvent against narrowly distributed PMMA standards. The MVR according to DIN EN 1133-1 is usually in the range from 0.5 to 150 and in particular 1 to 80 cm³/10 min (190 °C, 2.16 kg).

Polycaprolactone is commercially available for example from Daicel under the product name Placcel^{®}, or from Ingevity under the product name Capa^{™}.

Succinate-copolymers are generally known (e.g. as described in EP 2 350 162 B1) and may be prepared in analogy to polybutylene-succinate.

The C₆-C₁₈ dicarboxylic acids iv-b) are selected from C₆-C₁₈ dicarboxylic acids described under iii-a) and described as preferred.

Component iv-d) of the polybutylene-succinate-copolymers may be selected from the chain extender and branching agent iii-d) as described above and described as preferred.

Examples of succinate-copolymers are polybutylene succinate-co-adipate (PBSA), polybutylene succinate-co-sebacate (PBSSe), and polybutylene succinate-co-azelate (PBSAz). The succinate-copolymers iv) preferably have a number average molecular weight (Mn) in the range of 5 000 to 100 000, in particular in the range of 10 000 to 75 000 g/mol, preferably in the range of 15 000 to 50 000 g/mol, a weight average molecular weight (Mw) of 30 000 to 300 000, preferably 60 000 to 200 000 g/mol and an Mw/Mn ratio of 1 to 6, preferably 2 to 4. The viscosity number is usually between 30 and 450, preferably from 100 to 400 g/mL (measured in o-dichlorobenzene/phenol (weight ratio 50/50) according to DIN 53728-3:1985-1). The melting point is usually in the range of 60 to 130, preferably in the range of 70 to 110°C. The MVR according to DIN EN 1133-1 is usually in the range from 0.5 to 50 and in particular 3 to 40 cm³/10 min (190 °C, 2.16 kg).

The concentration of the at least one polymer selected from polycaprolactone and succinate-copolymers iv) in the biodegradable polymer composition is in the range from 5 to 30 wt.-%, based on the total weight of components i)-iv), preferably 5 to 25 wt.-%, and more preferred 6 to 20 wt.-%, based on the total weight of components i)-iv).

The biodegradable polymer composition comprises as component v) 0 to 40 wt.-%, based on the total weight of the polymer composition, of at least one inorganic filler and/or organic filler.

The inorganic filler may be selected from talc, calcium carbonate, kaolin, calcium sulfate, calcium chloride, sodium carbonate, titanium dioxide, silicate, graphite, iron oxide, dolomite, silicon dioxide, mineral fibers, mica, montmorillonite, and wollastonite. Preferred inorganic fillers are talc, kaolin, and calcium carbonate, which can be used alone or in mixture.

The organic filler may be selected from cellulose, natural fibers, saw dust, starch, and their derivatives. The starch may be selected from flour, native starch, modified starch, hydrolyzed starch, destructured starch, gelatinized starch, plasticized starch, thermoplastic starch, biofiller comprising complexed starch, and mixtures thereof. Native starches are e.g. derived from corn, potato, tapioca, pea, wheat or rice starch.

In case an inorganic and/or organic filler v) is present in the biodegradable polymer composition, the concentration of the filler is at least 2 wt.-%, preferably at least 5°wt.- % based on the total weight of the polymer composition. The maximum concentration of the filler is usually 40 wt.-%, preferably 38 wt.-% and more preferred 35 wt.-%, based on the total weight of the polymer composition. Depending on the intended use of the polymer composition different composition ranges may be more suited. In case the biodegradable polymer composition is intended to be used in injection molding, the concentration of the filler v) is preferably in the range of 5 to 30 wt.-%, more preferably in the range from 8 to 25 wt.-%, based on the total weight of the polymer composition. In case the biodegradable polymer composition is intended to be used in thermoforming, the concentration of the filler v) is preferably in the range of from 15 to 40 wt.-%, more preferably in the range from 20 to 35 wt.-%, based on the total weight of the polymer composition.

Calcium carbonate may be used for example at 10 to 30 wt%, preferably 10 to 28 wt% and more preferably 12 to 20 wt%, based on the total weight of the polymer composition. Calcium carbonate from Omya will prove suitable inter alia. The average particle size of calcium carbonate measured with a Malvern Mastersizer X is generally in the range from 0.2 to 10 micrometers, preferably 0.5 to 5 and more preferably 0.5 to 2.5 micrometers.

Talc may be used for example at 3 to 30 wt%, preferably 5 to 10 wt% and more preferably 5 to 8 wt%, based on the total weight of the polymer composition. Talc from companies Imerys and Elementis will be found suitable inter alia.

Talc may be used for example at 3 to 40 wt%, preferably 5 to 38 wt% and more preferred 8 to 35 wt%, based on the total weight of the polymer composition. Talc from companies Imerys and Elementis will be found suitable inter alia. It is possible to use talc with a high aspect ratio. The aspect ratio is defined as the ratio of length of the particles (longest dimension) to thickness of the particles (shortest dimension) and can be estimated according to Jennings theory by comparison of sedimentation-based particle diameters (by Sedigraph) to light scattering-based particle diameters (by Laser Mastersizer). Preferably, an aspect ratio of 1 to 1000 is used, more preferably, 10 to 500 and even more preferred 15 to 200. The average particle size of talc measured with a Malvern Masersizer X is generally in the range from 0.2 to 50 micrometers, preferably 0.5 to 20 micrometers, and more preferably 1 to 15 micrometers.

The biodegradable polymer composition comprises as component vi) 0 to 5 wt%, based on the total weight of the polymer composition, of at least one compound selected from cross-linking agents, chain extenders, stabilizers, nucleating agents, lubricants, release agents, surfactants, waxes, antistatic agents, antifoggants, dyes, pigments, UV absorbers, UV stabilizers, oxygen scavangers, and other plastics additives.

Examples of branching agents and chain extenders vi) are the compounds listed and referred to under iii-4) and iv-d), preferred branching agents and chain extenders are epoxy-containing copolymer based on styrene, acrylic ester and methacrylic ester, preferably of the styrene-glycidylether-methylmethacrylate type, and carbobdiimides, in particular preferred are epoxy-containing copolymer based on styrene, acrylic ester and methacrylic ester, preferably of the styrene-glycidylether-methylmethacrylate type. A preferred concentration range of the branching agents and chain extenders vi) is 0.05 to 1 wt.-% by weight, more preferred 0.05 to 0.2 wt.-%, based on the total weight of the polymer composition, of an epoxy-containing copolymer based on styrene, acrylic ester and/or methacrylic ester. Epoxy-containing copolymers of the abovementioned type are commercially available, for example from BASF Resins B.V. under the Joncryl^{®} ADR brand. Joncryl^{®} ADR 4468 and Joncryl^{®} ADR 4400 are particularly suitable.

Examples of release agents are C₁₆-C₂₄-carboxamide such as palmitamide, stearamide, oleamide, erucamide and behenamide, and stearates like calcium stearate. Preferably the polymer composition contains 0.05 wt.-% to 1 wt.-%, based on the total weight of the polymer composition, of a C₁₆-C₂₄-carboxamide, preferably selected from stearamide, erucamide, and behenamide or mixtures thereof.

Examples of surfactants are polysorbates, palmitates and laurates.

Examples of UV absorbers are 2-(4,6-bis-biphenyl-4-yl-1,3,5-triazin-2-yl)-5-(2-ethyl-(n)-hexyloxy)phenol and carbon black. Preparation and properties of said UV absorber are known from WO 2009/071475.

An example of a dispersing agent is polyvinylalcohol (PVOH).

Component vi) is generally employed in concentrations of 0 to 5 wt.-%. In case the biodegradable polymer composition comprises a component vi), it is usually present in concentrations of 0.05 to 5 wt.-%, preferred 0.1 to 2 wt.-%, and more preferred 0.2 to 1 wt.-%, based on the total weight of the polymer composition.

In a preferred embodiment the biodegradable polymer composition comprises 0.1 to 0.8 wt.-% based on the total weight of the polymer composition, of at least one release agent. This is in particular advantageous in case the biodegradable polymer composition is used for injection molding.

The biodegradable polymer composition usually has a melt volume rate (MVR) according to EN ISO 1133 (190°C, 2.16 kg weight) of at least 0.5 up to 100 cm^{3/}10 min. In case the polymer composition is intended to be used in injection molding, the melt volume rate (MVR) according to EN ISO 1133 (190°C, 2.16 kg weight) of the polymer composition is preferably above 8 up to 70, more preferred above 9 up to 50 cm³/10 min. In case the polymer composition is intended to be used in thermoforming the melt volume rate (MVR) according to EN ISO 1133 (190°C, 2.16 kg weight) of the polymer composition is preferably at least 1 up to 15, more preferred at least 1 up to 10 cm^{3/}10 min.

Preferred biodegradable polymer compositions for injection molding comprise
i) 30 to 80 wt.-%, preferably 35 to 75 wt.-%, more preferably 40 to 75 wt.-%, based on the total weight of components i)-iv), of at least one polybutylene succinate,
ii) 5 to 30 wt.-%, preferably 5 to 25 wt.-%, more preferably 6 to 22 wt.-%, based on the total weight of components i)-iv), of at least one polyhydroxyalkanoate selected from polylactic acid, polyhydroxy butyrate, polyhydroxy butyrate-co-hydroxy valerate, and polyhydroxy butyrate-co-hydroxy hexanoate;
iii) 3 to 30 wt.-%, preferably 4 to 20 wt.-%, more preferably 5 to 16 wt.-%, based on the total weight of components i)-iv), of at least one biodegradable aliphatic-aromatic polyester;
iv) 5 to 30 wt.-%, preferably 5 to 25 wt.-%, more preferably 6 to 19 wt.-%, based on the total weight of components i)-iv), of at least one polymer selected from polycaprolactone and succinate-copolymers based on
   iv-a) from 70 to 100 mol%, based on components iv-a) to iv-b), of succinic acid;
   iv-b) from 0 to 30 mol%, based on components iv-a) to iv-b), of one or more C₆-C₁₈ dicarboxylic acids;
   iv-c) from 98 to 102 mol%, based on components iv-a) to iv-b), of a diol selected from 1,3-propanediol and 1,4-butanediol;
   iv-d) from 0 to 1% by weight, based on components iv-a) to iv-c), of a chain extender and/or branching agent;
v) 0 to 40 wt.-%, preferably 5 to 30 wt%, more preferably 8 to 25 wt%, based on the total weight of the polymer composition, of at least one inorganic filler and/or organic filler; and

i)
   a. 0 to 5 wt%, based on the total weight of the polymer composition, of at least one compound selected from cross-linking agents, chain extenders, stabilizers, nucleating agents, lubricants, surfactants, waxes, antistatic agents, antifoggants, dyes, pigments, UV absorbers, UV stabilizers, oxygen scavangers, and other plastics additives, and
   b. 0.05 to 1 wt%, preferably 0.1 to 0.8 wt.-%, based on the total weight of the polymer composition, of at least one release agent;
where the weight ratio of the sum of components iii) and iv) vs. component i) is smaller than 1.

Preferred biodegradable polymer compositions for thermoforming comprise
ii) 30 to 80 wt.-%, preferably 35 to 75 wt.-%, more preferably 40 to 75 wt.-%, based on the total weight of components i)-iv), of at least one polybutylene succinate,
iii) 5 to 30 wt.-%, preferably 5 to 25 wt.-%, more preferably 6 to 22 wt.-%, based on the total weight of components i)-iv), of at least one polyhydroxyalkanoate selected from polylactic acid, polyhydroxy butyrate, polyhydroxy butyrate-co-hydroxy valerate, and polyhydroxy butyrate-co-hydroxy hexanoate;
iv) 3 to 30 wt.-%, preferably 4 to 25 wt.-%, more preferably 6 to 16 wt.-%, based on the total weight of components i)-iv), of at least one biodegradable aliphatic-aromatic polyester;
v) 5 to 30 wt.-%, preferably 5 to 25 wt.-%, more preferably 6 to 20 wt.-%, based on the total weight of components i)-iv), of at least one polymer selected from polycaprolactone and succinate-copolymers based on
   iv-a) from 70 to 100 mol%, based on components iv-a) to iv-b), of succinic acid;
   iv-b) from 0 to 30 mol%, based on components iv-a) to iv-b), of one or more C₆-C₁₈ dicarboxylic acids;
   iv-c) from 98 to 102 mol%, based on components iv-a) to iv-b), of a diol selected from 1,3-propanediol and 1,4-butanediol;
   iv-d) from 0 to 1% by weight, based on components iv-a) to iv-c), of a chain extender and/or branching agent;
vi) 0 to 40 wt.-%, preferably 15 to 40 wt%, more preferably 20 to 35 wt%, based on the total weight of the polymer composition, of at least one inorganic filler and/or organic filler; and
vii) 0 to 5 wt%, based on the total weight of the polymer composition, of at least one compound selected from cross-linking agents, chain extenders, stabilizers, nucleating agents, lubricants, surfactants, release agents, waxes, antistatic agents, antifoggants, dyes, pigments, UV absorbers, UV stabilizers, oxygen b. scavangers, and other plastics additives;
where the weight ratio of the sum of components iii) and iv) vs. component i) is smaller than 1.

The polymer composition is biodegradable. It has to be noticed, that terms like "biodegradability", "biodegradable" and "compostability" are used for biological degradation under a wide range of different environmental conditions. The result of the biodegradability is generally that the polymers or polymer mixtures break down within an appropriate and demonstrable period. The biological degradation may be brought about enzymatically, hydrolytically, oxidatively, and/or via exposure to electromagnetic radiation, such as UV radiation, and is mostly predominantly caused by exposure to microorganisms, such as bacteria, yeasts, fungi, and algae and depends on the specific ambient conditions. In consequence different standards were developed for the determination of biodegradability or compostability under specified conditions.

An example of requirements and methods for quantifying the biodegradability of polyesters in compost is defined in DIN EN 13432 (December 2000, "Requirements for packaging recoverable through composting and biodegradation"). Compostability according to this standard simulates decomposition in industrial composting plants and requires that a material mixed with compost under defined conditions of temperature of 58 ± 2°C, oxygen and moisture in the presence of micro-organisms as specified in ISO 14855 : 1999, must have biodegraded within at maximum six months to at least 90 % in total ("absolute" CO₂ evolution) or 90 % of the maximum biodegradation of a reference material, e.g. cellulose, ("relative" CO₂ evolution) into water, carbon dioxide and biomass. The percentage of biodegradation is based on the conversion of the carbon of the test substance into carbon dioxide. The compostability under these conditions is also called industrial compostability. According to this invention the polymer composition is considered biodegradable if it meets the above conditions.

Preferably the polymer composition is home compostable. Home compostability of a polymer composition can be determined by following the methods described in ISO 14855-1 (2012) or EN ISO 14855-2 but using a lower temperature. The criteria for reaching home compostability are e.g. defined in DIN EN 17427:2022. According to this norm a polymer composition can be classified as home compostable if it reaches according 90% absolute or relative CO₂ evolution within 365 days at a temperature in the range of from 25 +/-5°C, i.e. the polymer composition is biodegradable under less severe conditions than industrial composting conditions.

More preferred the biodegradable polymer composition is home compostable according to ISO 14855-1 (2012) reaching 90% absolute or relative CO₂ evolution within 365 days at a temperature in the range of from 25 +/- 5°C determined by particles of the polymer composition with particle size of 100 to 300 microns.

Another object of the invention is an article comprising the biodegradable polymer composition as described above. Preferably the article is a thermoformed or injection molded article. The article may come in different forms and can be used for different purposes. The article may be a mono-layered or multi-layered film comprising at least one layer comprising the biodegradable polymer composition, preferably the at least one layer consists of the biodegradable polymer composition. The article may be a packaging like yoghurt or margarine cups; containers for filling hot food and beverages; lids for cups for hot beverages and food like coffee, tea, milk and soups; capsules for coffee, tea, soup, milk and the like to be used for their preparation; as well as chocolate box inserts. The article may also be a microwave dish; a plant pot; game box inserts; and folding blisters for all kinds of small items and the like. In particular preferred the article is a food or beverage packaging.

Preferably the article is home compostable wherein the home compostability of the article is determined as described above.

A further object of the present invention is a process for producing the article as described above comprising the steps
A) Providing a biodegradable polymer composition as described above,
B) Producing a film from the biodegradable polymer composition in case the article is manufactured by thermoforming,
C) Manufacturing an article by thermoforming or injection molding the biodegradable polymer composition provided in step A) or the film obtained in step B).

Another object of the present invention is the use of the biodegradable polymer composition as described above for producing an article as described above.

Even without further statements, it is assumed that a skilled person is able to utilize the above description in its widest extent. The invention is described in more detail by the examples hereinafter.

### Examples

### 1 Analytics

### 1.1 MVR:

The MVR (melt volume rate) of the polymers and polymer compositions was measured according to EN ISO 1133 at 190 °C with a weight of 2.16 kg if not indicated otherwise.

### 1.2 E modulus:

E modulus was determined according to ISO 527-2:2012 on dumbbell shaped specimens with a thickness of approx. 3.95 mm (specimen type 1A) at 23 °C at 50% relative humidity.

### 1.3 impact strength:

Charpy impact strength was determined according to DIN EN 179-1/1eU:2000+Amd.A (at 23 °C, 50% rel. humidity) on notched 80 mm x 10 mm x 4 mm specimens.

### 1.4 HDT/B

Heat deflection temperature (HDT/B) was determined according to DIN EN ISO 75-2:2004-9 using a flatwise orientation of 80 mm x 10 mm x 4 mm specimens. Method B was used involving 0.45 MPa stress and a temperature ramping rate of 120 K/h.

### 2 Production of polymer compositions

### Polymers used for producing the compositions

### Polybutylene succinate (PBS 1):

A poly(butylene succinate) with an MVR (190 °C, 2.16 kg) of 28 cm³/10 min. It is commercially available from PTT MCC Biochem under the brand BioPBS^{™} FZ71PM.

### Polybutylene succinate (PBS 2):

A poly(butylene succinate) with an MVR (190 °C, 2.16 kg) of 6 cm³/10 min. It is commercially available from PTT MCC Biochem under the brand BioPBS^{™} FZ91PM.

### Polylactide 1 (PLA 1):

A polylactide with an MVR (210 °C, 2.16 kg) of 32-38 cm³/10 min. It is commercially available from Natureworks under the brand Ingeo^{™} 3251D.

### Polylactide 2 (PLA 2):

A polylactide with an MVR (210 °C, 2.16 kg) of 7 cm³/10 min. It is commercially available from Natureworks under the brand Ingeo^{™} 4043D.

### Polycaprolactone 1 (PCL 1):

A high molecular weight linear polyester derived from caprolactone monomer having a viscosity number of 224.1 ml/g, as determined according to DIN 53728-3:1985-1 and Mn of 30 000 g/mol, as determined by GPC. It is commercially available from Ingevity under the brand Capa^{™} 6500.

### Polycaprolactone 2 (PCL 2):

A high molecular weight linear polyester derived from caprolactone monomer having a viscosity number of 375.5 ml/g, as determined according to DIN 53728-3:1985-1 and Mn of 39 000 g/mol, as determined by GPC. It is commercially available from Ingevity under the brand Capa^{™} 6800.

### Polybutylene succinate-co-adipate (PBSA):

A poly(butylene succinate-co-adipate) with an MVR (190 °C, 2.16 kg) of 4 cm³/10 min. It is commercially available from PTT MCC Biochem under the brand BioPBS^{™} FD92PM.

### Polyester 1:

A poly(butylene sebacate-co-terephthalate) having an MVR (190 °C, 2.16 kg) of 7 +/- 2 cm³/10 min according to EN ISO 1133.

### Polyester 2:

A poly(butylene sebacate-co-terephthalate) having an MVR (190 °C, 5 kg) of 3 +/- 2 cm³/10 min according to EN ISO 1133.

### Filler:

A talc powder commercially available from Elementis under the brand Plustalc H05C.

### Additive:

An erucamide commercially available from Croda under the brand Crodamide^{™} ER.

### TPU:

A polyester based thermoplastic polyurethane commercially available from BASF SE under the brand Elastollan^{®} C85A.

All polymer compositions were prepared by extrusion on a twin screw extruder.

**Table A: Relative share of the polymers used for the polymer compositions (PBS 1, PLA 1, PCL 1, PBSA, Polyester 1, TPU) for injection molding (given in % by weight based on the total weight of the polymers and of Filler and Additive (given in % by weight based on the total weight of the polymer composition).**

| Example | PBS 1 (rel.) | PLA 1 (rel.) | PCL 1 (rel.) | PBSA (rel.) | Polyester 1 (rel.) | TPU (rel.) | Filler (abs.) | Additive (abs.) |
|---|---|---|---|---|---|---|---|---|
| CE1 | 69 | 25.1 | 0 | 0 | 5.9 | 0 | 20 | 0.3 |
| CE2 | 64.4 | 16.7 | 0 | 0 | 5.6 | 13.3 | 10 | 0 |
| CE3 | 60 | 20 | 20 | 0 | 0 | 0 | 20 | 0 |
| IE1 | 46.9 | 18.8 | 18.7 | 0 | 15.6 | 0 | 20 | 0 |
| IE2 | 47.1 | 18.9 | 18.9 | 0 | 15.1 | 0 | 20 | 0.5 |
| CE4 | 33.3 | 26,5 | 16.1 | 0 | 24.1 | 0 | 18.5 | 0.5 |
| IE3 | 50.7 | 18,3 | 15.5 | 0 | 15.5 | 0 | 25.5 | 0.5 |
| IE4 | 62.8 | 25.1 | 0 | 6.3 | 5.8 | 0 | 20 | 0.4 |
| IE5 | 56.5 | 18.8 | 0 | 12.6 | 12.1 | 0 | 20 | 0.4 |
| IE6 | 56.6 | 25.1 | 6.3 | 6.3 | 5.7 | 0 | 20 | 0.4 |
| IE7 | 75.4 | 6.3 | 0 | 12.5 | 5.8 | 0 | 20 | 0.4 |

**Table B: Relative share of the polymers used for polymer compositions (PBS 2, PLA 2, PCL 2, Polyester 2) for thermoforming (given in % by weight based on the total weight of the polymers) and of Filler and Additive (given in % by weight based on the total weight of the polymer compositions).**

| Example | PBS 2 (rel.) | PLA 2 (rel.) | PCL 2 (rel.) | Polyester 2 (rel.) | Filler (abs.) |
|---|---|---|---|---|---|
| | | | | | |
| CE5 | 60 | 20 | 20 | 0 | 0 |
| IE8 | 50 | 20 | 20 | 10 | 0 |
| CE6 | 37.5 | 15 | 15 | 32.5 | 0 |
| CE7 | 60 | 20 | 20 | 0 | 20 |
| IE9 | 46.9 | 18.8 | 18.7 | 15.6 | 20 |
| CE8 | 39.4 | 15.8 | 15.7 | 29.1 | 20 |
| CE9 | 64.3 | 21.4 | 0 | 14.3 | 30 |

**Table C: Properties of the polymer compositions prepared for injection molding applications**

| Example | MVR (190 °C, 2.16 kg) [mL/10 min] | E [MPa] | Charpy, notched, a_{cN} [kJ/m²] | HDT/B [°C] |
|---|---|---|---|---|
| CE1 | 13.1 | 2239 | 3.8 | 89.8 |
| CE2 | 13.8 | 1143 | 7.4 | 79.8 |
| CE3 | 15.9 | 2174 | 3.7 | 83.6 |
| IE1 | 19.4 | 1574 | 5.5 | 62.3 |
| IE2 | 23.4 | 1488 | 5.1 | 60.8 |
| CE4 | 13.9 | 1550 | 8.1 | 56.2 |
| IE3 | 10.7 | 1891 | 4.4 | 76.5 |
| IE4 | 11.8 | 2250 | 5.8 | 84.0 |
| IE5 | 9.7 | 1704 | 7.0 | 83.3 |
| IE6 | 13.8 | 2058 | 6.2 | 76.2 |
| IE7 | 9.5 | 1570 | 6.3 | 90.8 |

As shown, introduction of PCL 1 and/or PBSA in a specific range increases impact strength without decreasing stiffness too drastic. In comparison to the introduction of TPU, PCL 1 and PBSA offer a better balance of stiffness vs. impact strength and the blend is furthermore compostable according to EN 13432. Complete substitution of soft polymers in the compositions (i.e. Polyester 1, PBSA, and PCL 1) by PCL 1 does not result in desirable mechanical properties due to lack of impact strength. Balancing the content of both soft polymers is required to obtain the right set of mechanical properties.

**Table D: Properties of the polymer compositions prepared for thermoforming applications**

| Example | MVR (190 °C, 2.16 kg) [mL/10 min] | E [MPa] | Charpy, notched, a_{cN} [kJ/m²] | HDT/B [°C] |
|---|---|---|---|---|
| CE5 | 7.2 | 1120 | 8.7 | 60.3 |
| IE8 | 7.6 | 928 | 20.9 | 52.8 |
| CE6 | 3.8 | 588 | 73.7 | 51.8 |
| CE7 | 3.9 | 2231 | 5.3 | 83.0 |
| IE9 | 1.5 | 1607 | 10.2 | 59.1 |
| CE8 | 2.5 | 1137 | 44.0 | 56.5 |
| CE9 | 0.4 | 2733 | 4.8 | 89.4 |

CE5, CE6, and IE8 show that a polymer compositions including both soft polymers Polyester 2 and PCL 2 is required for a balanced profile of mechanical properties with a high mechanical stiffness and a high impact strength. The decrease of heat deflection temperature can be furthermore counteracted by introduction of a filler into the polymer compositions (CE7, CE8, IE9). CE9 further shows that using only Polyester 2 as soft polymer is not sufficient to reach the desired balance of stiffness vs. impact strength.

## Claims

1. A biodegradable polymer composition comprising
vii) 30 to 80 wt.-%, based on the total weight of components i)-iv), of at least one polybutylene succinate,
viii) 5 to 30 wt.-%, based on the total weight of components i)-iv), of at least one polyhydroxyalkanoate selected from polylactic acid, polyhydroxy butyrate, polyhydroxy butyrate-co-hydroxy valerate, and polyhydroxy butyrate-co-hydroxy hexanoate;
ix) 3 to 30 wt.-%, based on the total weight of components i)-iv), of at least one biodegradable aliphatic-aromatic polyester;
x) 5 to 30 wt.-%, based on the total weight of components i)-iv), of at least one polymer selected from polycaprolactone and succinate-copolymers based on
iv-a) from 70 to 100 mol%, based on components iv-a) to iv-b), of succinic acid;
iv-b) from 0 to 30 mol%, based on components iv-a) to iv-b), of one or more C₆-C₁₈ dicarboxylic acids;
iv-c) from 98 to 102 mol%, based on components iv-a) to iv-b), of a diol selected from 1,3-propanediol and 1,4-butanediol; and
iv-d) from 0 to 1% by weight, based on components iv-a) to iv-c), of a chain extender and/or branching agent;
xi) 0 to 40 wt.-%, based on the total weight of the polymer composition, of at least one inorganic filler and/or organic filler; and
xii) 0 to 5 wt%, based on the total weight of the polymer composition, of at least one compound selected from cross-linking agents, chain extenders, stabilizers, nucleating agents, lubricants, release agents, surfactants, waxes, antistatic agents, antifoggants, dyes, pigments, UV absorbers, UV stabilizers, oxygen scavangers, and other plastics additives.
where the weight ratio of the sum of components iii) and iv) vs. component i) is smaller than 1.

2. The biodegradable polymer composition according to claim 1 wherein the biodegradable aliphatic-aromatic polyester iii) is a polyester based on
iii-a) from 20 to 70 mol%, based on components iii-a) to iii-b), of an aliphatic C₆-C₁₈ dicarboxylic acid;
iii-b) from 30 to 80 mol%, based on components iii-a) to iii-b), of an aromatic dicarboxylic acid selected from terephthalic acid and 2,5-furanedicarboxylic acid;
iii-c) from 98 to 102 mol%, based on components iii-a) to iii-b), of a diol selected from 1,3-propanediol and 1,4-butanediol;
iii-d) from 0 to 1% by weight, based on components iii-a) to iii-c), of a chain extender and/or branching agent.

3. The biodegradable polymer composition according to any of claims 1 or 2, wherein the aliphatic-aromatic polyester iii) is selected from polybutylene-adipate-co-terephthalate, polybutylene-sebacate-co-terephthalate, polybutylene-azelate-co-terephthalate, polybutylene-brassylate-co-terephthalate, polybutylene-adipate-co-sebacate-co-terephthalate, polybutylene-adipate-co-azelate-co-terephthalate, polybutylene-adipate-co-brassylate-co-terephthalate, polybutylene-azelate-co-sebacate-co-terephthalate, polybutylene-brassylate-co-sebacate-co-terephthalate, polybutylene-adipate-co-furanoate, polybutylene-sebacate-co-furanoate, polybutylene-azelate-co-furanoate, polybutylene-brassylate-co-furanoate, polybutylene-adipate-co-sebacate-co-furanoate, polybutylene-adipate-co-azelate-co-furanoate, polybutylene-adipate-co-brassylate-co-furanoate, polybutylene-azelate-co-sebacate-co-furanoate, and polybutylene-brassylate-co-sebacate-co-furanoate.

4. The biodegradable polymer composition according to any of claims 1 to 3 wherein the polyhydroxyalkanoate ii) is polylactic acid.

5. The biodegradable polymer composition according to any of claims 1 to 4 comprising an inorganic filler selected from talc, calcium carbonate, kaolin, calcium sulfate, calcium chloride, sodium carbonate, titanium dioxide, silicate, graphite, iron oxide, dolomite, silicon dioxide, mineral fibers, mica, montmorillonite, and wollastonite, and/or an organic filler selected from cellulose, natural fibers, saw dust, starch, and their derivatives.

6. The biodegradable polymer composition according to any of claims 1 to 5 wherein the concentration of the fillers v) is in the range of 5 to 30 wt.-%.

7. The biodegradable polymer composition according to any of claims 1 to 6 comprising 0.2 to 0.8 wt.-% based on the total weight of the polymer composition, of at least one release agent.

8. The biodegradable polymer composition according to any of claims 1 to 7 having a melt volume rate (MVR) according to EN ISO 1133 (190°C, 2.16 kg weight) above 8 up to 70 cm³/10 min.

9. The biodegradable polymer composition according to any of claims 1 to 5 wherein the concentration of the fillers v) is in the range of 15 to 40 wt.-%.

10. The biodegradable polymer composition according to any of claims 1 to 5 or 9 having a melt volume rate (MVR) according to EN ISO 1133 (190°C, 2.16 kg weight) of at least 1 up to 15 cm^{3/}10 min.

11. An article comprising the biodegradable polymer composition according to any of claims 1 to 10.

12. The article according to claim 11 wherein the article is a thermoformed or injection molded article.

13. The article according to claim 11 or 12 wherein the article is a mono-layered or multi-layered film comprising at least one layer comprising the biodegradable polymer composition according to any of claims 1 to 10.

14. The article according to any of claims 11 to 13 wherein the article is a packaging like yoghurt or margarine cups; containers for filling hot food and beverages; lids for cups for hot beverages and food like coffee, tea, milk and soups; capsules for coffee, tea, soup, milk and the like to be used for their preparation; as well as chocolate box inserts; a microwave dish, a plant pot, game box inserts, a folding blister for small items , preferably the article is a food or beverage packaging.

15. The article according to any of claims 11 to 14 wherein the article is home compostable.

16. A process for producing an article according to any of claims 11 to 15 comprising the steps
D) Providing a biodegradable polymer composition according to any of claims 1 to 10,
E) Producing a film from the biodegradable polymer composition in case the article is manufactured by thermoforming,
F) Manufacturing an article by thermoforming or injection molding the biodegradable polymer composition provided in step A) or the film obtained in step B).

17. Use of the biodegradable polymer composition according to any of claims 1 to 10 for producing an article according to any of claims 11 to 15.
